# EUROPÄISCHE PATENTSCHRIFT

(11) **EP 2 066 939 B1**
(45) Veröffentlichungstag und Bekanntmachung des Hinweises auf die Patenterteilung: **09.11.2011**
(21) Anmeldenummer: 07802166.4
(22) Anmeldetag: 06.09.2007
(51) Int. Cl.: F16K 27/00, F16K 37/00

(54) **VENTILSTEUEREINHEIT, INSBESONDERE VORSTEUEREINHEIT FÜR EINEN DRUCKMODULATOR EINES NUTZFAHRZEUGES**
VALVE CONTROL UNIT, PARTICULARLY PILOT CONTROL UNIT FOR A PRESSURE MODULATOR OF A COMMERCIAL VEHICLE
UNITE DE COMMANDE A VALVES, NOTAMMENT UNITE DE PRECOMMANDE POUR UN MODULATEUR DE PRESSION SUR UN VEHICULE INDUSTRIEL

(30) Priorität: 20.09.2006 DE 102006044764
(43) Veröffentlichungstag der Anmeldung: 10.06.2009
(73) Patentinhaber: WABCO GmbH, 30453 Hannover (DE)
(72) Erfinder: FRANK, Dieter, 30171 Hannover (DE); HÖFLER, Siegfried, 30165 Hannover (DE); TEICHMANN, Andreas, 30916 Isernhagen (DE)
(74) Vertreter: Lauerwald, Jörg
(86) Internationale Anmeldenummer: PCT/EP2007/007761
(87) Internationale Veröffentlichungsnummer: WO 2008/034525

(56) Entgegenhaltungen:
- EP-A- 1 127 764
- WO-A-2006/007970
- DE-A1- 10 310 083
- DE-A1- 10 354 189
- DE-A1- 19 747 142
- US-A1- 2005 194 052
- US-A1- 2006 032 537

## Beschreibung

Die Erfindung betrifft eine Ventilsteuereinheit, insbesondere eine Vorsteuereinheit für einen Druckmodulator eines Nutzfahrzeuges.

Eine derartige Vorsteuereinheit steuert mit ihren Magnetventilen ein Luftmengen verstärkendes Relaisventil an, das wiederum ein oder mehrere Kanäle ansteuern kann. Bei Verwendung in einem elektropneumatischen Bremssystem, z.B. einem elektronisch geregelten Bremssystem (EBS) für Anhängerfahrzeuge, werden durch das Relaisventil Radbremsmodule mit Bremszylindern für die Radbremsen angesteuert.

Die DE 100 09 116 A1 zeigt eine entsprechende Vorsteuereinheit für einen Bremsdruckmodulator in einem Anhänger mit elektronischer Bremsanlage. Hierbei sind die Magnetventile als Patronen-Magnetventile ausgeführt, deren Ventilpatrone in ein Gehäuse mit Magnetspule gesetzt wird. Hierbei wird zuerst die Magnetspule in das Gehäuse eingelegt und anschließend die Ventilpatrone in einer Montagerichtung in das Gehäuse eingeschoben und mit dem Gehäuse verbunden. Die Vorsteuereinheit weist eine pneumatische und eine elektrische Schnittstelle auf.

Die DE 10 2004 035 763 A1 zeigt eine Ventilsteuereinrichtung, die vorzugsweise als Ventilsteuereinheit für zwei Bremskanäle einer elektronisch-pneumatischen Bremsanlage jeweils eine Ventileinheit als Ventil-Modulator-Einrichtung für einen Bremsdruckregelkreis ausgebildet ist; hierbei ist ein Belüftungsventil mit einem Primäranker und ein Entlüftungsventil mit einem Sekundäranker vorgesehen, wobei die beiden Magnetanker eine gemeinsame Ankerführungsanordnung und ein gemeinsames Magnetspulensystem aufweisen und bei unterschiedlichen Stromstärken schalten. Somit kann eine Belüftung des nachfolgenden Radmoduls, ein Halten des eingegebenen Drucks und ein Entlüften mittels eines gemeinsamen Magnetspulensystems verwirklicht werden.

Derartige Ventilsteuereinheiten bzw. Vorsteuereinheiten sind jedoch im Allgemeinen komplex aufgebaut und erfordern einen großen Bauraum. Insbesondere ist die Herstellung eines Hauptgehäuses und weiterer Bauteile und die pneumatische Luftführung durch diverse Luftkanäle, Dichtungen und gegebenenfalls Schläuchen zwischen den verschiedenen Bauteilen aufwändig. Auch die Anbringung der Magnetspulen und Drucksensoren und die Kontaktierung mit der Elektronik über die separaten Schnittstellen ist aufwändig.

Im Falle eines Defektes an den Sensoren, den Ventilen oder der Elektronik ist hierbei ein Austausch der gesamten Ventilsteuereinheit erforderlich.

Die EP 1127764 A2 zeigt eine Ventilsteuereinheit gemäß dem einleitenden Teil von Anspruch 1. Weiterhin ist offenbart, dass in einem Anhängerbremsventil ein Drucksensor zur Ermittlung des elektrischen Sollwertes vorgesehen ist für den Fall, dass der EBS-Anhänger in einem konventionellen Zugfahrzeug betrieben wird.

Die DE 103 100 083 A1 beschreibt eine hydraulische Druckregelvorrichtung für ein Fahrzeug, bei der ein Drucksensor auf der Oberseite der hydraulischen Steuereinheit vorgesehen ist, und eine elektronische Steuereinheit auf die hydraulische Steuereinheit aufgesetzt wird.

Der Erfindung liegt die Aufgabe zugrunde, eine Ventilsteuereinheit, insbesondere für einen pneumatischen Druckmodulator eines Nutzfahrzeuges zu schaffen, die eine kostengünstige Herstellung bei geringer Störungsanfälligkeit und geringem Bauraum ermöglicht.

Diese Aufgabe wird durch eine Ventilsteuereinheit nach Anspruch 1 gelöst. Die Unteransprüche beschreiben bevorzugte Weiterbildungen. Hierbei ist ergänzend der Druckmodula-tor mit einer derartigen als Vorsteuereinheit ausgebildeten Ventilsteuereinheit vorgesehen.

Erfindungsgemäß sind somit in einem vorzugsweise einteiligen Gehäuse bzw. einem Gehäusekörper die Magnetventile durch in dem Gehäuse aufgenommene Magnetspulen und in Ventilbohrungen eingesetzte Ventilpatronen ausgebildet, und weiterhin die Drucksensoren auf einer Gehäuseseite angebracht. Die mikrostrukturierten Drucksensoren (sind) als Sensorhybride bzw. Hybrid-Chip-Anordnungen direkt auf die Gehäuse-Oberseite aufgesetzt. Hierbei ist an einer Gehäuseseite, vorzugsweise der Gehäuse-Oberseite eine elektrische Schnittstelle ausgebildet, in der die Kontaktierung der Magnetspulen und die Kontaktierung der Drucksensoren erfolgt. Die Drucksensoren können somit direkt mit einem Schaltungsträger, z.B. einer Leiterplatte, elektrisch kontaktiert werden, wobei die Magnetspulen direkt mit dem Schaltungsträger kontaktiert sein können.

Die erfindungsgemäße Ventilsteuereinheit ist platzsparend und wenig störanfällig, da die internen Luftzuführleitungen gegenüber mechanischen Beschädigungen oder Leckagen sicher sind. Auch die elektrische Kontaktierung bzw. Bondung über die elektrische Schnittstelle ist wenig störanfällig. Die Drucksensoren ermöglichen direkt eine Messung der pneumatischen Drücke ohne zusätzliche Schlauchverbindungen.

Erfindungsgemäß ist die Steuereinrichtung vorteilhafterweise nicht direkt auf der Ventilsteuereinheit vorgesehen, sondern mit der Ventilsteuereinheit über deren elektrische Schnittstelle kontaktiert; sie kann jedoch auch z. B. direkt auf dem Schaltungsträger angebracht sein.

Weiterhin weist die Ventilsteuereinrichtung eine pneumatische Schnittstelle auf, die vorteilhafterweise an einer Seite des Gehäuses als Labyrinthdichtung bzw. als Kontur für eine Labyrinthdichtung aufgebildet ist. Die pneumatische Schnittstelle weist hierbei Anschlüsse für mehrere Leitungen, z. B. zu einem Vorratsdruck und für verschiedene Ausgänge auf.

Somit kann das Ventilsteuergehäuse mit dieser Seite direkt auf das Relaisventil aufgesetzt und z.B. durch eine Schraubenbefestigung an dieses angepresst werden, ohne dass weitere wesentliche Abdichtungen erforderlich sind. Die Druckräume des Relaisventils können ohne bzw. ohne wesentliche Bearbeitung direkt zu den benötigen Druckanschlüssen des Ventilsteuergehäuses, d.h. den aufgenommenen Magnetventilen oder den Drucksensoren, geführt werden.

Vorteilhafterweise ist das Ventilsteuergehäuse derartig ausgebildet, dass die Drucksensoren mit der elektrischen Schnittstelle auf der Oberseite, die pneumatische Schnittstelle auf der entgegen gesetzten Seite, d.h. der Unterseite angeordnet sind, und die Magnetventile in einer hierzu horizontalen Richtung verlaufen. Somit verlaufen Luftzuführ-Bohrungen von der pneumatischen Schnittstelle zu der Oberseite bis unter die Drucksensoren und weiterhin zu den Aufnahmebohrungen der Ventilpatronen der Magnetventile. Diese Bohrungen können ohne wesentliche Nachbearbeitung direkt im Kunststoffgehäuse ausgebildet werden.

Die Magnetspulen können z.B. von der Oberseite her eingesetzt werden, wozu eine Ausnehmung, z. B. eine Gusstasche von der Oberseite des Ventilsteuergehäuses her ausgebildet ist. Somit kann der Schaltungsträger gemäß einer Variante mit bereits angelöteten Magnetspulen von oben eingesetzt werden oder auf die bereits eingesetzten Magnetspulen aufgesetzt und kontaktiert bzw. verlötet werden; nachfolgend bildet der Schaltungsträger die elektrische Schnittstelle bzw. nimmt einen zusätzlichen Stecker als elektrische Schnittstelle auf. Die ebenfalls von oben aufgesetzten Drucksensoren bzw. Sensorhybride können direkt an den Schaltungsträger kontaktier, z. B. gebondet werden. Die Ventilinnenteile sind vorzugsweise als Ventilpatronen ausgebildet und können in seitlicher Richtung in die Magnetspulen eingesetzt werden; somit ist die Herstellung und Montage sehr einfach in wenigen Prozessschritten möglich. Die Ventilpatronen können zur Fixierung, gegebenenfalls auch zur Halterung der Magnetspulen dienen.

Das Ventilsteuergehäuse kann relativ einfach, z.B. als Spritzgussteil mit Gusstaschen und vollständig ausgebildeten Bohrungen bzw. Kanälen hergestellt und in wenigen Prozessschritten mit den weiteren Bauteilen, d.h. dem Schaltungsträger mit angelöteten Magnetspulen, Ventilpatronen sowie den Drucksensoren bzw. Sensorhybriden bestückt werden. Nachfolgend kann die Ventilsteuereinheit direkt auf das Relaisventil aufgesetzt und durch z.B. Verschraubungen an diesem dichtend angepresst werden.

Die erfindungsgemäße Ventilsteuereinheit kann als Vorsteuereinheit sowohl in einem elektropneumatischen Bremssystem, d.h. in einem elektropneumatischen Bremsdruckmodulator zur Ansteuerung der Relaisventile für die nachfolgenden Bremskanäle, als auch in einem elektropneumatischen Niveauregelsystem mit Luftbälgen zur Niveauregelung bzw. Traktionsregelung eingesetzt werden.

Die Erfindung wird im Folgenden anhand der beiliegenden Zeichnungen an einer Ausführungsform näher erläutert. Es zeigen:
- Fig. 1: eine Seitenansicht einer erfindungsgemäße Ventilsteuereinheit als Vorsteuereinheit mit Anschlusskabel und Stecker;
- Fig. 2: eine Draufsicht auf die Vorsteuereinheit aus Fig. 1;

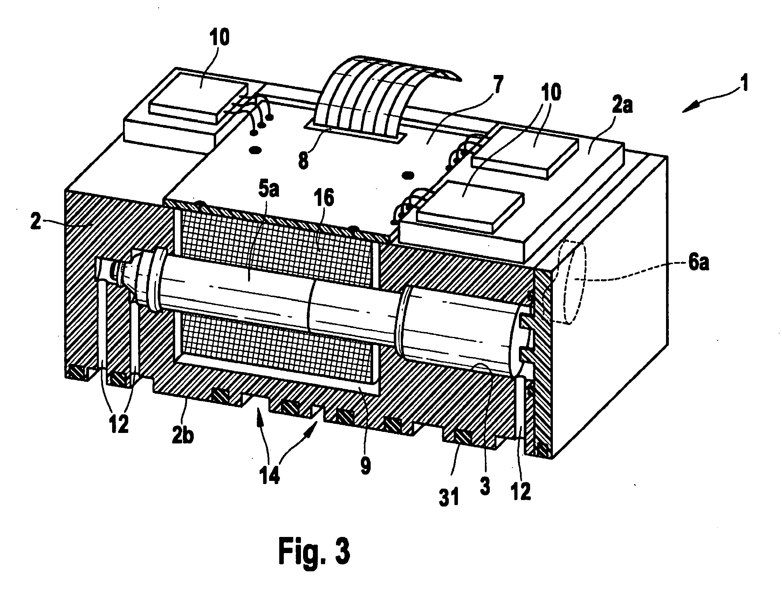

- Fig. 3: die Vorsteuereinheit aus Fig. 1, 2 im perspektivischen Querschnitt durch ein aufgenommenes Ventil bei ungeschnittener Ventilpatrone;
- Fig. 4: einen Horizontalschnitt durch sämtliche Ventile der Vorsteuereinheit;
- Fig. 5: den Einbau der Vorsteuereinheit in den gesamten Druckmodulator.

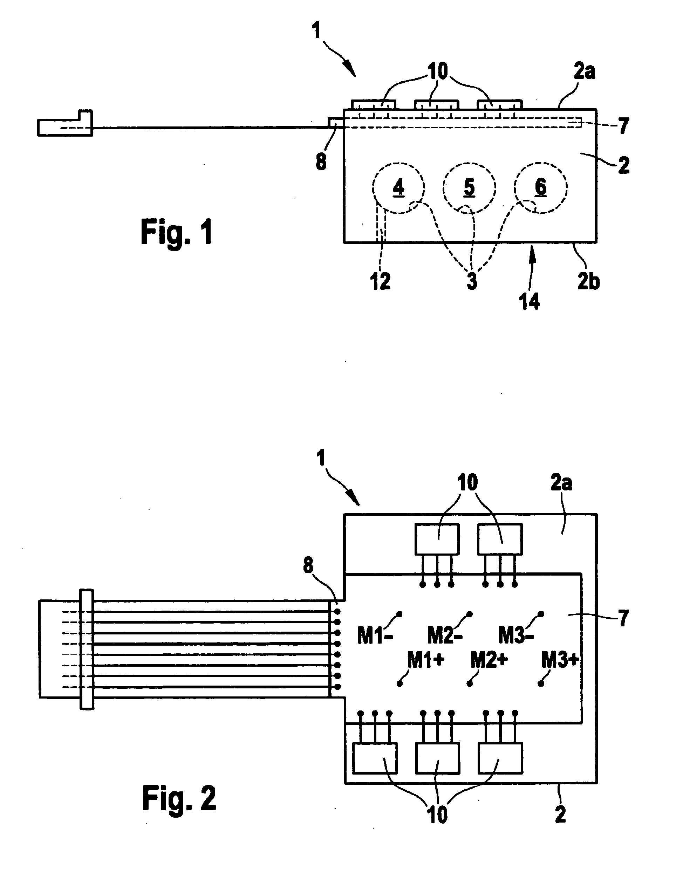

Eine Vorsteuereinheit 1 weist ein vorzugsweise aus Kunststoff hergestelltes Vorsteuergehäuse 2 auf, in dem Magnetventile 4, 5, 6 aufgenommen sind. Hierbei verlaufen in Querrichtung durch das Vorsteuergehäuse 2 Bohrungen 3, in die Ventilpatronen 4a, 5a, 6a eingesetzt sind. Im Inneren des Vorsteuergehäuses 2 ist einen als Gusstasche 9 ausgebildeten Freiraum für die Magnetspulen 16 vorgesehen, in die die Ventilpatronen 4, 5, 6 eingesetzt werden. Auf der Oberseite 2a des Vorsteuergehäuses 2 ist ein Schaltungsträger 7, z.B. eine Leiterplatte 7 mit einer elektrischen Schnittstelle 8, z.B. einem Stecker 8 angebracht. Die Magnetspulen 16 sind in Kontakten M1+, M1-, M2+, M2-, M3+, M3-direkt an der Leiterplatte 7 befestigt. Gemäß Fig. 1, 2 kann an die elektrische Schnittstelle 8 ein Flachbandkabel angeschlossen werden.

Auf der Oberseite 2a sind weiterhin Drucksensoren 10 angebracht, z.B. als mikrostrukturierte Chip-Sensoren (DIE-Sensoren) mit einem Sensor-Chip auf einem Chip-Träger, z.B. einem Keramik-Hybrid. An der Unterseite 2b des Vorsteuergehäuses 2 ist eine pneumatische Schnittstelle 14 der Vorsteuereinheit 1 ausgebildet, von der aus Luftkanäle 12 zu den Drucksensoren 10 und zu den Magnetventilen 4, 5, 6 verlaufen. Die pneumatische Schnittstelle 14 bildet durch einfaches Anpressen an das Relaisventil 18 ein Dichtlabyrinth aus; hierbei sind Dichtungen 31 an der pneumatischen Schnittstelle 14 vorgesehen.

Die Drucksensoren 10 können direkt, d.h. ohne Chip-Träger, auf der Oberseite 2a des Vorsteuergehäuses 2 befestigt und mit der Leiterplatte 7 durch Bond-Verbindungen kontaktiert werden.

Als Magnetventile können je nach Anwendung unterschiedliche Ventile eingesetzt werden, z. B. ein 3/2-Wegeventil als Redundanzventil 5, das in seinem unbestromten Zustand (Redundanzfall) eine pneumatische Durchsteuerung vom Bremswertgeber des Fahrers ermöglicht und in seinem bestromten Zustand die elektro-pneumatische EBS-Steuerung ermöglicht.

Weiterhin können in einem einfachen Fall ein 2/2- Wegeventil als Belüftungsventil 4 und ein weiteres 2/2- Wegeventil als Entlüftungsventil 6 vorgesehen sein. Gemäß einer bevorzugten Ausführungsform sind hierbei Zweistufen- Magnetventile 4 und 6 vorgesehen, wie sie grundsätzlich bereits aus der DE 10 2004 035 763 A1 bekannt sind. Somit weist jedes Magnetventil 4, 6 jeweils ein 2/2- Wege-Primärventil an seiner Primärseite und ein 3/2-Wegeventil an seiner Sekundärseite auf, wobei der Primäranker und Sekundäranker in einem gemeinsamen Ankerführungsrohr geführt und von einem gemeinsamen Magnetspulensystem mit zwei Stromstufen gesteuert werden. Hierbei ist im stromlosen Zustand das Primärventil offen und das Sekundärventil in seiner Belüftungsstellung, so dass eine Belüftung bzw. ein Zuführen von Steuerdruck möglich ist. Bei einer ersten, niedrigeren Stromstärke schließt das Primärventil ohne Veränderung des Sekundärventils, so dass der Druck im nachfolgenden pneumatischen Zylinder gehalten wird; bei der zweiten, höheren Stromstärke verstellt sich das Sekundärventil (bei unverändert sperrendem Primärventil), so dass eine Entlüftung über das Sekundärventil möglich ist.

Die Ventile 4, 5, 6 sind über in dem Vorsteuergehäuse 2 intern ausgebildete Luftkanäle 12 mit der pneumatischen Schnittstelle 14 verbunden.

Vorteilhafterweise ist somit keine elektrische Steuereinrichtung auf dieser Vorsteuereinheit 1 vorgesehen. Die Steuerung erfolgt über die elektrische Schnittstelle 8.

Alternativ hierzu kann die Leiterplatte 7 jedoch auch mit der Steuereinrichtung, z. B. einem Mikroprozessor und/oder weiteren Elektronik-Bauteilen einer Regelung versehen sein.

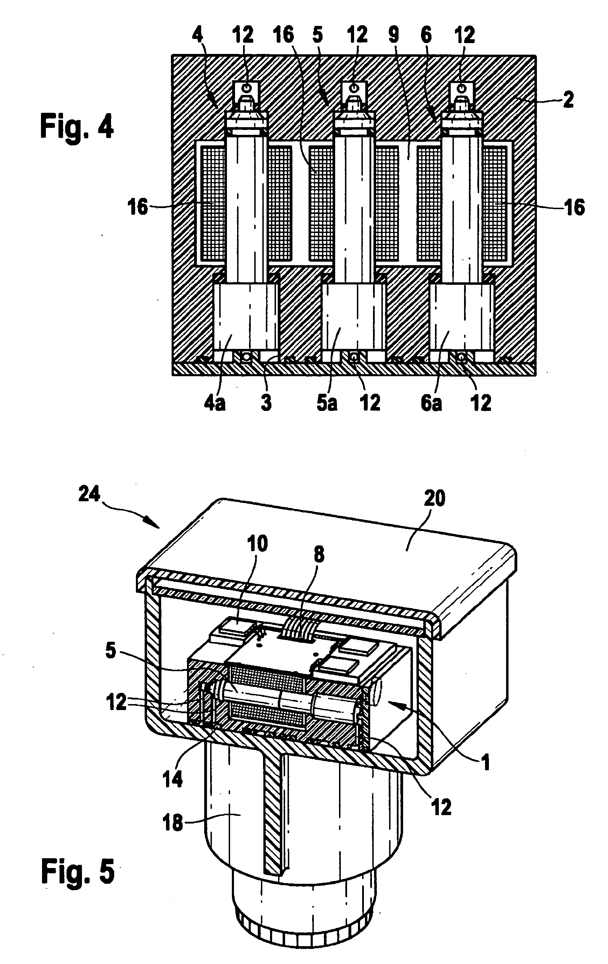

Fig. 5 zeigt den Einsatz der Vorsteuereinheit 1 nach unten mit seiner als Dichtlabyrinth ausgebildeten pneumatischen Schnittstelle 14 auf das Relaisventil 18 zur Luftmengenverstärkung. Oben wird ein Elektrik-Bauteil 20 auf die Vorsteuereinheit 1 gesetzt und mit der elektrischen Schnittstelle 8 kontaktiert, wodurch der Druckmodulator 24 gebildet wird.

## Patentansprüche

1. Ventilsteuereinheit, insbesondere für einen Druckmodulator eines Nutzfahrzeuges, wobei die Ventilsteuereinheit (1) aufweist:
ein Ventilsteuergehäuse (2),
Magnetventile (4, 5, 6), die Magnetspulen (16) und in die Magnetspulen (16) eingesetzte Ventilinnenteile (4a, 5a, 6a) aufweisen, und
eine pneumatische Schnittstelle (14),
wobei die Magnetspulen (16) in dem Ventilsteuergehäuse (2) aufgenommen sind,
wobei in dem Ventilsteuergehäuse (2) Ventilbohrungen (3) verlaufen, in die die Ventilinnenteile (4a, 5a, 6a) eingesetzt sind,
wobei in dem Ventilsteuergehäuse (2) zwischen der pneumatischen Schnittstelle (14) und den Ventilbohrungen (3) Luftkanäle (12) verlaufen,
**dadurch gekennzeichnet, dass**
in oder auf der Ventilsteuereinheit Drucksensoren (10) zur Messung pneumatischer Drücke aufgenommen sind, wobei die Drucksensoren (10) an in dem Ventilsteuergehäuse (2) zu der pneumatischen Schnittstelle (14) und/oder den Ventilbohrungen (3) verlaufende Luftkanäle (12) angeschlossen sind, und
die Magnetspulen (16) und die Drucksensoren (10) mit einer elektrischen Schnittstelle (8) kontaktiert sind,
wobei die Drucksensoren (10) auf einer Oberseite (12a) des Ventilsteuergehäuses (2) als Hybrid-Chip-Anordnungen angebracht und kontaktiert sind.

2. Ventilsteuereinheit nach Anspruch 1, **dadurch gekennzeichnet, dass** das Ventilsteuergehäuse (2) einteilig ausgebildet ist.

3. Ventilsteuereinheit nach Anspruch 1 oder 2, **dadurch gekennzeichnet, dass** mindestens zwei Magnetventile (4, 5, 6) als Zwei-Stufen-Magnetventil ausgebildet sind mit zwei in einem gemeinsamen Magnetspulensystem aufgenommenen Ankern, wobei das Magnetspulensytem stromlos betreibbar ist sowie mit einer ersten, niedrigeren und einer zweiten, höheren Stromstärke bestrombar sind.

4. Ventilsteuereinheit nach Anspruch 1, **dadurch gekennzeichnet, dass** auf der Oberseite (2a) ein Schaltungsträger (7) angebracht ist, mit dem die Drucksensoren (10) und die Magnetspulen (16) sowie die elektrische Schnittstelle (8) kontaktiert sind.

5. Ventilsteuereinheit nach Anspruch 4, **dadurch gekennzeichnet, dass** die elektrische Schnittstelle (8) lediglich an der Oberseite (2a) des Ventilsteuergehäuses (2) ausgebildet ist, z.B. mit oder an einer Leiterplatte (7) und/oder einer flexiblen Folie und/oder einem Stanzgitter.

6. Ventilsteuereinheit nach Anspruch 1 oder 5, **dadurch gekennzeichnet, dass** der Schaltungsträger (7) mit weiteren Bauteilen, insbesondere mit einer Steuereinrichtung zur elektrischen Steuerung der Magnetventile und/oder Bauteilen einer Regelungselektronik, bestückt ist.

7. Ventilsteuereinheit nach einem der Ansprüche 1 bis 6, **dadurch gekennzeichnet, dass** sie frei ist von einer elektronischen Steuereinrichtung und mit einer externen elektronischen Steuereinrichtung über ihre elektrische Schnittstelle (8) verbunden ist.

8. Ventilsteuereinheit nach einem der Ansprüche 4 bis 7, **dadurch gekennzeichnet, dass** die pneumatische Schnittstelle (14) an der der Oberseite (2a) gegenüberliegenden Unterseite (2b) des Ventilsteuergehäuses (2) angeordnet ist, wobei im Ventilsteuergehäuse (2) Luftkanäle (12) von der pneumatischen Schnittstelle (14) zu den Drucksensoren (10) verlaufen.

9. Ventilsteuereinheit einem der bisherigen Ansprüche, **dadurch gekennzeichnet, dass** die pneumatische Schnittstelle (14) eine Labyrinthdichtung aufweist oder ausbildet.

10. Ventilsteuereinheit nach einem der vorherigen Ansprüche, **dadurch gekennzeichnet, dass** die pneumatische Schnittstelle (14) mehrere pneumatische Verbindungen zwischen pneumatischen Leitungen aufweist.

11. Ventilsteuereinheit nach einem der vorherigen Ansprüche, **dadurch gekennzeichnet, dass** die Magnetspulen (16) in einem mittleren Freiraum (9) des Ventilsteuergehäuses (2), z. B. einer Gusstasche (9), angeordnet sind, durch den die Ventilbohrungen (3) mit den eingesetzten Ventilinnenteilen (4a, 5a, 6a) verlaufen.

12. Ventilsteuereinheit nach Anspruch 11, **dadurch gekennzeichnet, dass** die Ventilinnenteile eines Magnetventils jeweils als eine einteilig einsetzbare Ventilpatrone (4a, 5a, 6a) ausgebildet sind.

13. Ventilsteuereinheit nach Anspruch 12, **dadurch gekennzeichnet, dass** die eingesetzten Ventilpatronen (4a, 5a, 6a) die in den Freiraum (9) eingesetzten Magnetspulen (16) fixieren.

14. Ventilsteuereinheit nach einem der vorherigen Ansprüche, **dadurch gekennzeichnet, dass** die pneumatische Schnittstelle (14) auf ein Luftmengen verstärkendes Ventil(18) aufgesetzt und durch eine z.B. über Befestigungsschrauben ausgebildete Anpresskraft dichtend befestigt ist.

15. Ventilsteuereinheit nach einem der vorherigen Ansprüche, **dadurch gekennzeichnet, dass** als Magnetventile (4, 5, 6) mindestens vorgesehen sind:
ein Redundanzventil (5) zum Umschalten zwischen einem pneumatischen Redundanzbetrieb und einer elektropneumatischen Steuerung, und/oder
zwei Magnetventile (4, 6) zum Belüften und Entlüften.

16. Ventilsteuereinheit nach einem der vorherigen Ansprüche, **dadurch gekennzeichnet, dass** sie eine Bremsdruck-Vorsteuereinheit für das elektropneumatische Bremssystems eines Nutzfahrzeuges oder eine Vorsteuereinheit einer pneumatischen Niveauregelung oder Traktionsregelung eines Nutzfahrzeuges ist.

17. Ventilsteuereinheit nach einem der vorherigen Ansprüche, **dadurch gekennzeichnet, dass** das einteilige Ventilsteuergehäuse (2) aus einem Kunststoff ausgebildet, z. B.. in einem Spritzgussverfahren hergestellt ist.

18. Druckmodulator (24) mit einer als Vorsteuereinheit (1) ausgebildeten Ventilsteuereinheit nach einem der vorherigen Ansprüche, einem Relaisventil (18), das an die pneumatische Schnittstelle (14) unter Ausbildung einer Anpresskraft dichtend angesetzt ist, und einer Elektronikeinrichtung (20) mit einer Steuereinrichtung, wobei die Elektronikeinheit (20) mit der elektrischen Schnittstelle (8) der Vorsteuereinheit (1) kontaktiert ist.

## Claims

1. Valve control unit, particularly for a pressure modulator of a commercial vehicle, wherein the valve control unit (1) has:
a valve control housing (2),
solenoid valves (4, 5, 6) which have magnet coils (16) and valve inner parts (4a, 5a, 6a) inserted into the magnet coils (16), and
a pneumatic interface (14),
wherein the magnet coils (16) are accommodated in the valve control housing (2),
wherein valve bores (3), into which the valve inner parts (4a, 5a, 6a) are inserted, run in the valve control housing (2),
wherein air ducts (12) run in the valve control housing (2) between the pneumatic interface (14) and the valve bores (3),
**characterized in that** pressure sensors (10) for measuring pneumatic pressures are accommodated in or on the valve control unit, the pressure sensors (10) being connected to air ducts (12) running in the valve control housing (2) to the pneumatic interface (14) and/or to the valve bores (3), and
the magnet coils (16) and the pressure sensors (10) are contacted by an electric interface (8), the pressure sensors (10) being fitted and contacted as hybrid chip arrangements on an upper side (12a) of the valve control housing (2).

2. Valve control unit according to Claim 1, **characterized in that** the valve control housing (2) is formed as a single part.

3. Valve control unit according to Claim 1 or 2, **characterized in that** at least two solenoid valves (4, 5, 6) are designed as a two-stage solenoid valve with two armatures which are accommodated in a common magnet coil system, it being possible for the magnet coil system to be operated currentlessly and to be energized at a first, lower and a second, higher current strength.

4. Valve control unit according to Claim 1, **characterized in that** a circuit carrier (7), by virtue of which the pressure sensors (10) and the magnet coils (16) and the electric interface (8) are contacted, is fitted on the upper side (2a).

5. Valve control unit according to Claim 4, **characterized in that** the electric interface (8) is formed only on the upper side (2a) of the valve control housing (2), for example by or on a printed circuit board (7) and/or a flexible film and/or a lead frame.

6. Valve control unit according to Claim 1 or 5, **characterized in that** the circuit carrier (7) is fitted with further components, in particular with a control device for electrically controlling the solenoid valves and/or components of an electronic control system.

7. Valve control unit according to one of Claims 1 to 6, **characterized in that** said valve control unit is free of an electronic control device and is connected via the electric interface (8) thereof to an external electronic control device.

8. Valve control unit according to one of Claims 4 to 7, **characterized in that** the pneumatic interface (14) is arranged on the lower side (2b) of the valve control housing (2), the lower side lying opposite the upper side (2a), air ducts (12) running in the valve control housing (2) from the pneumatic interface (14) to the pressure sensors (10).

9. Valve control unit according to one of the preceding claims, **characterized in that** the pneumatic interface (14) has or forms a labyrinth seal.

10. Valve control unit according to one of the preceding claims, **characterized in that** the pneumatic interface (14) has a plurality of pneumatic connections between pneumatic lines.

11. Valve control unit according to one of the preceding claims, **characterized in that** the magnet coils (16) are arranged in a central clearance (9) in the valve control housing (2), for example a cast pocket (9), through which clearance valve bores (3), with the valve inner parts (4a, 5a, 6a) inserted, run.

12. Valve control unit according to Claim 11, **characterized in that** the valve inner parts of a solenoid valve are each designed as a valve cartridge (4a, 5a, 6a) which can be inserted as a single part.

13. Valve control unit according to Claim 12, **characterized in that** the inserted valve cartridges (4a, 5a, 6a) fix the magnet coils (16) which are inserted into the clearance (9).

14. Valve control unit according to one of the preceding claims, **characterized in that** the pneumatic interface (14) is placed onto an air-quantity-increasing valve (18) and is fastened in a sealing manner by a contact pressure force formed, for example, via fastening screws.

15. Valve control unit according to one of the preceding claims, **characterized in that** at least the following are provided as solenoid valves (4, 5, 6):
a redundancy valve (5) for switching over between a pneumatic redundancy mode and an electro pneumatic control, and/or
two solenoid valves (4, 6) for ventilating and venting.

16. Valve control unit according to one of the preceding claims, **characterized in that** said valve control unit is a brake pressure pilot control unit for the electro-pneumatic braking system of a commercial vehicle or is a pilot control unit of a pneumatic ride-height control system or traction control system of a commercial vehicle.

17. Valve control unit according to one of the preceding claims, **characterized in that** the single-part valve control housing (2), which is formed from a plastic, is produced, for example, in an injection-moulding process.

18. Pressure modulator (24) with a valve control unit which is designed as a pilot control unit (1) according to one of the preceding claims, a relay valve (18) which is fitted in a sealing manner to the pneumatic interface (14) with a contact pressure force being formed, and an electronic device (20) with a control device, the electronic unit (20) being contacted by the electric interface (8) of the pilot control unit (1).

## Revendications

1. Unité de commande de vanne, notamment pour un modulateur de pression d'un véhicule utilitaire, l'unité de commande de vanne (1) présentant :
un boîtier de commande de vanne (2),
des électrovannes (4, 5, 6) qui présentent des bobines magnétiques (16) et des parties intérieures de vanne (4a, 5a, 6a) implantées dans les bobines magnétiques (16), et
une interface pneumatique (14),
les bobines magnétiques (16) étant logées dans le boîtier de commande de vanne (2),
des alésages de vanne (3) dans lesquels sont implantées les parties intérieures de vanne (4a, 5a, 6a) s'étendant dans le boîtier de commande de vanne (2),
des canaux à air (12) s'étendant dans le boîtier de commande de vanne (2) entre l'interface pneumatique (14) et les alésages de vanne (3),
**caractérisée en ce que**
des capteurs de pression (10) destinés à mesurer des pressions pneumatiques sont logés sur ou dans l'unité de commande de vanne, les capteurs de pression (10) étant raccordés aux canaux à air (12) qui s'étendent dans le boîtier de commande de vanne (2) vers l'interface pneumatique (14) et/ou les alésages de vanne (3), et
les bobines magnétiques (16) et les capteurs de pression (10) sont mis en contact avec une interface électrique (8), les capteurs de pression (10) étant montés et mis en contact sur un côté supérieur (12a) du boîtier de commande de vanne (2) sous la forme d'arrangements de puce hybride.

2. Unité de commande de vanne selon la revendication 1, **caractérisée en ce que** le boîtier de commande de vanne (2) est réalisé d'une seule pièce.

3. Unité de commande de vanne selon la revendication 1 ou 2, **caractérisée en ce qu'**au moins deux électrovannes (4, 5, 6) sont réalisées sous la forme d'une électrovanne à deux étages avec deux induits logés dans un système de bobine magnétique commun, le système de bobine magnétique pouvant être utilisé sans électricité et pouvant aussi être alimenté avec une première intensité de courant plus faible et une deuxième plus élevée.

4. Unité de commande de vanne selon la revendication 1, **caractérisée en ce que** sur le côté supérieur (2a) est monté un support de circuit (7) avec lequel sont en contact les capteurs de pression (10) et les bobines magnétiques (16) ainsi que l'interface électrique (8).

5. Unité de commande de vanne selon la revendication 4, **caractérisée en ce que** l'interface électrique (8) est uniquement configurée sur le côté supérieur (2a) du boîtier de commande de vanne (2), par exemple avec ou sur un circuit imprimé (7) et/ou un film souple et/ou une grille estampée.

6. Unité de commande de vanne selon la revendication 1 ou 5, **caractérisée en ce que** le support de circuit (7) est équipé de composants supplémentaires, notamment d'un dispositif de commande pour la commande électrique des électrovannes et/ou des composants d'une électronique de régulation.

7. Unité de commande de vanne selon l'une des revendications 1 à 6, **caractérisée en ce qu'**elle est dépourvue d'un dispositif de commande électronique et elle est reliée avec un dispositif de commande électronique externe par le biais de son interface électrique (8).

8. Unité de commande de vanne selon l'une des revendications 4 à 7, **caractérisée en ce que** l'interface pneumatique (14) est disposée sur le côté inférieur (2b) opposé au côté supérieur (2a) du boîtier de commande de vanne (2), des canaux à air (12) s'étendant dans le boîtier de commande de vanne (2), de l'interface pneumatique (14) jusqu'aux capteurs de pression (10).

9. Unité de commande de vanne selon l'une des revendications précédentes, **caractérisée en ce que** l'interface pneumatique (14) présente ou forme une garniture d'étanchéité à labyrinthe.

10. Unité de commande de vanne selon l'une des revendications précédentes, **caractérisée en ce que** l'interface pneumatique (14) présente plusieurs liaisons pneumatiques entre des lignes pneumatiques.

11. Unité de commande de vanne selon l'une des revendications précédentes, **caractérisée en ce que** les bobines magnétiques (16) sont disposées dans un espace libre central (9) du boîtier de commande de vanne (2), par exemple une poche de coulée (9), à travers lequel s'étendent les alésages de vanne (3) dans lesquels sont implantées les parties intérieures de vanne (4a, 5a, 6a).

12. Unité de commande de vanne selon la revendication 11, **caractérisée en ce que** les parties intérieures de vanne d'une électrovanne sont respectivement réalisées sous la forme d'une cartouche de vanne (4a, 5a, 6a) implantable d'une seule pièce.

13. Unité de commande de vanne selon la revendication 12, **caractérisée en ce que** les cartouches de vanne (4a, 5a, 6a) implantées fixent les bobines magnétiques (16) implantées dans l'espace libre (9).

14. Unité de commande de vanne selon l'une des revendications précédentes, **caractérisée en ce que** l'interface pneumatique (14) est montée sur une vanne (18) amplifiant le volume d'air et elle est fixée hermétiquement par une force de pressage obtenue par le biais de vis de fixation, par exemple.

15. Unité de commande de vanne selon l'une des revendications précédentes, **caractérisée en ce que** les électrovannes (4, 5, 6) suivantes sont au moins prévues :
une vanne de redondance (5) pour permuter entre un mode de redondance pneumatique et une commande électropneumatique, et/ou
deux électrovannes (4, 6) pour l'aération et la purge.

16. Unité de commande de vanne selon l'une des revendications précédentes, **caractérisée en ce qu'**elle est une unité de commande pilote de la pression de freinage pour le système de freinage électropneumatique d'un véhicule utilitaire ou une unité de commande pilote d'une régulation de niveau pneumatique ou d'une régulation de traction d'un véhicule utilitaire.

17. Unité de commande de vanne selon l'une des revendications précédentes, **caractérisée en ce que** le boîtier de commande de vanne (2) monobloc est réalisé en une matière plastique, par exemple fabriqué dans un procédé de moulage par injection.

18. Modulateur de pression (24) comprenant une unité de commande de vanne selon l'une des revendications précédentes réalisée sous la forme d'une unité de commande pilote (1), une vanne à relais (18) qui est montée hermétiquement sur l'interface pneumatique (14) en formant une force de pressage, et un dispositif électronique (20) avec un dispositif de commande, l'unité électronique (20) étant en contact avec l'interface électrique (8) de l'unité de commande pilote (1).
